# EUROPEAN PATENT SPECIFICATION

(11) **EP 3 124 240 B1**
(45) Date of publication and mention of the grant of the patent: **28.11.2018**
(21) Application number: 15768116.4
(22) Date of filing: 09.01.2015
(51) Int. Cl.: B32B 27/32, B32B 7/02, B32B 27/00, B32B 33/00, E04F 15/16, B32B 7/12, B32B 21/02, B32B 21/08, B32B 27/16, B32B 27/18

(54) **DECORATIVE SHEET AND DECORATIVE PLATE USING SAME**
DEKORATIVE FOLIE UND DEKORATIVE PLATTE DAMIT
FEUILLE DÉCORATIVE ET PLAQUE DÉCORATIVE UTILISANT CELLE-CI

(30) Priority: 26.03.2014 JP 2014064516; 25.09.2014 JP 2014195355
(43) Date of publication of application: 01.02.2017
(73) Proprietor: Dai Nippon Printing Co., Ltd., Shinjuku-ku Tokyo 162-8001 (JP)
(72) Inventor: OONO, Tatsuya, Tokyo 1628001, (JP); HORIO, Yoshiaki, Tokyo 1628001, (JP); SHINBARA, Yuuhei, Tokyo 1628001, (JP); KISHIMOTO, Sachi, Tokyo 1628001, (JP)
(74) Representative: Müller-Boré & Partner Patentanwälte PartG mbB
(86) International application number: PCT/JP2015/050449
(87) International publication number: WO 2015/146217

(56) References cited:
- EP-A1- 2 168 762
- JP-A- 2007 168 217
- JP-A- 2010 106 654
- JP-A- 2011 067 975
- JP-A- 2012 210 741
- JP-A- 2012 215 064
- DATABASE WPI Week 200636 Thomson Scientific, London, GB; AN 2006-346883 XP002773760, & JP 2006 123512 A (DAINIPPON PRINTING CO LTD) 18 May 2006 (2006-05-18)
- DATABASE WPI Week 201027 Thomson Scientific, London, GB; AN 2010-E09021 XP002773770, & JP 2010 082972 A (DAINIPPON PRINTING CO LTD) 15 April 2010 (2010-04-15)

## Description

### Technical Field

The present invention relates to a decorative sheet and a decorative plate using the decorative sheet.

### Background Art

Chipboards produced from materials, such as cork oak, are used as floor base materials because they are environmentally friendly, have sound insulation and heat insulation effects, and have a soft texture. Chipboards as referred to herein are wood base materials obtained by mechanically grinding lumber waste, bark, and small-diameter logs discarded in saw mills, building scrap wood discarded in demolition and construction sites, and the like, to form chips, and performing compression molding on the chips together with a synthetic resin adhesive to mold them into plates.

Floor decorative materials comprising chipboards are generally produced by bonding to chipboards decorative sheets having a design, such as a wood-grain pattern. Recently, to make use of the characteristics of chipboards (e.g., giving warmth, pleasant texture, etc.), floor decorative materials have been increasingly produced by using the surface design of chipboards themselves. For example, a floor decorative material that makes use of the surface design of an unmodified chipboard and that is produced by directly applying a urethane resin to the chipboard to impart enhanced scratch resistance is known. Also known is a floor decorative material comprising a chipboard and a transparent decorative sheet bonded to the chipboard, the decorative sheet comprising vinyl chloride or polyolefin.

When scratch resistance is to be improved by direct coating on chipboards, and if impact resistance and abrasion resistance are also intended to be improved simultaneously, it is necessary to increase the thickness of the coating film or add an additive, such as alumina, to the coating composition. However, in these cases, the floor decorative material has excessively high hardness, impairing the good walking feeling (texture) specific to chipboards. Accordingly, it is considered difficult to simultaneously achieve good impact resistance, abrasion resistance, and walking feeling with a floor decorative material obtained by direct coating on chipboards.

Further, there is another problem when a transparent decorative sheet is bonded to chipboards. Because chipboard surfaces are highly uneven (ten-point average roughness Rzⱼᵢₛ: about 80 to 250 µm), air bubbles tend to remain between the chipboard and the transparent decorative sheet upon bonding together. To solve this problem, finer chips, for example, may be used to form a chipboard; or an increased amount of adhesive may be used for bonding. However, since both of these methods increase the amount of adhesive used, avoiding these methods is preferable from the viewpoints of cost, environment, etc. Accordingly, instead of increasing the amount of adhesive used, forming a transparent decorative sheet by mainly using vinyl chloride, and adding a plasticizer to impart flexibility may be considered to ensure good bonding ability. However, this method fails to achieve sufficient improvement due to restrictions on the use of plasticizers with vinyl chloride, as well as due to UV ray discoloration, deterioration, and poor heat resistance of vinyl chloride.

To improve the above problems encountered when using vinyl chloride, Patent Literature (PTL) 1, for example, discloses a decorative material produced by bonding to the surface of a woody base material a decorative sheet comprising a polyolefin-based sheet (in particular, polypropylene). However, even when such a decorative sheet comprising a polyolefin-based sheet is used, there is room for improvement because when a chipboard is used as a floor base material (adherend), it is difficult to simultaneously achieve good impact resistance, abrasion resistance, and walking feeling, as well as bonding ability of the decorative sheet. Patent Literature (PTL) 2 discloses a decorative sheet for floor material comprising a decorative sheet intermediate having one or more layers laminated on the front surface of a base material sheet; and a synthetic resin backer layer formed on the back surface of the base material sheet. The synthetic resin baker layer is formed from two or more layers including a hard layer and a soft layer.

### Citation List

### Patent Literature

PTL 1: JP2010-082972A
PTL 2: EP 2 168 762 A1

### Summary of Invention

### Technical Problem

A primary object of the present invention is to provide a decorative sheet that is capable of suppressing residual air bubbles between the decorative sheet and a chipboard when the decorative sheet is bonded to the chipboard to produce a decorative plate, the decorative plate having good impact resistance, abrasion resistance, and walking feeling. Solution to Problem

The present inventors conducted extensive research to achieve the above object. As a result, the inventors found that a decorative sheet having a specific layer structure and hardness characteristics can achieve the above object, and accomplished the present invention.

More specifically, the present invention provides a decorative sheet and a decorative plate using the decorative sheet as defined in the appended claims. The decorative sheet comprising a transparent base material layer, and at least a transparent resin layer and an ionizing radiation-curable transparent surface-protecting layer laminated in this order on the transparent base material layer, (1) the transparent base material layer and the transparent resin layer both containing a polyolefin resin. The transparent base material layer has a layer thickness of 10 to 250 µm and a Martens hardness of 20 to 30 N/mm². The transparent resin layer has a Martens hardness of 100 N/mm² or less, and the Martens hardness of the transparent resin layer is greater than that of the transparent base material layer. The total thickness of the transparent base material layer and the transparent resin layer is 100 to 420 µm. The decorative sheet comprises a picture pattern layer between the transparent base material layer and the transparent resin layer. The transparent base material layer may comprise a laminate of two or more layers. The transparent resin layer may comprise a laminate of two or more layers. A gloss-adjusting layer may be formed on the transparent resin layer, and the gloss-adjusting layer is formed adjacent to the transparent surface-protecting layer. The decorative plate is obtained by laminating the decorative sheet as defined here above to an adherend, the adherend being a chipboard or a composite base material having a chipboard on its surface. The chipboard may have a ten-point average roughness Rzⱼᵢₛ of 80 to 250 µm. The decorative plate may be a decorative plate for floors.

### Advantageous Effects of Invention

The decorative sheet of the present invention is capable of suppressing residual air bubbles between the decorative sheet and a chipboard when the decorative sheet is bonded to the chipboard to form a decorative plate. Furthermore, the decorative plate of the present invention has good impact resistance, abrasion resistance, and walking feeling. Furthermore, unlike conventional decorative sheets, the decorative sheet of the present invention does not contain vinyl chloride as a main component; therefore, problems encountered when using vinyl chloride, such as discoloration and deterioration, can be avoided. Brief Description of Drawings

Fig. 1 shows a cross-sectional view of an example of the decorative sheet according to the present invention.
Fig. 2 (a) shows a diamond indenter used in the measurement of Martens hardness in the present specification; (b) shows a schematic diagram of the press operation; and (c) shows an example of press load and displacement.
Fig. 3 is a cross-sectional view schematically showing an example of the decorative sheet according to the present invention.
Fig. 4 is a cross-sectional view schematically showing an example of the decorative sheet according to the present invention.
Fig. 5 is a cross-sectional view schematically showing an example of the decorative sheet according to the present invention.

### Description of Embodiments

The decorative sheet and the decorative plate using the decorative sheet are described below.

### Decorative sheet

The decorative sheet of the present invention is capable of suppressing residual air bubbles between the decorative sheet and a chipboard when the decorative sheet is bound to the chipboard to form a decorative plate. Furthermore, the decorative plate thus obtained has good impact resistance, abrasion resistance, and walking feeling. Further, unlike conventional decorative sheets, the decorative sheet of the present invention does not contain vinyl chloride as a main component; therefore, the decorative sheet of the present invention is free of problems encountered in using vinyl chloride, such as discoloration and deterioration.

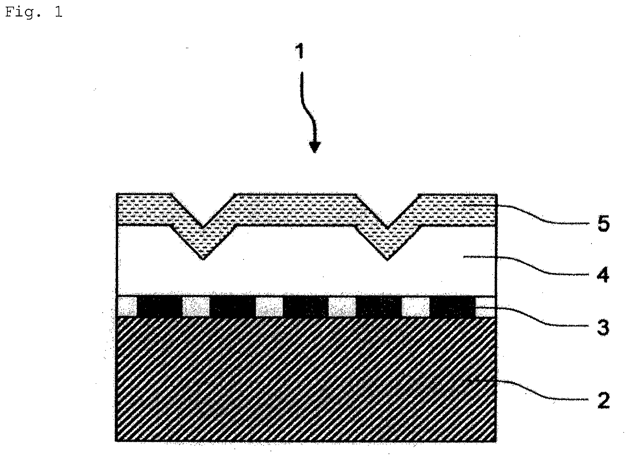

In the decorative sheet of the present invention, the layer structure is not particularly limited. Examples of the layer structure include a decorative sheet in which a picture pattern layer, a transparent resin layer, and an ionizing radiation-curable transparent surface-protecting layer are laminated in this order on a transparent base material layer as shown in Fig. 1; a layer structure in which a picture pattern layer, a transparent adhesive layer, a transparent resin layer, and an ionizing radiation-curable transparent surface-protecting layer are laminated in this order on a transparent base material layer; and the like. To improve the adhesion to a chipboard upon production of a decorative plate, a back-surface primer layer may be laminated on the back surface of the base material sheet. In the present specification, a direction viewed from the transparent base material layer where the transparent surface-protecting layer is laminated is referred to as "above" or "the front surface," and a direction viewed from the transparent base material layer where a back-surface primer layer is laminated (direction where a chipboard is laminated during the production of a decorative plate) is referred to as "below" or "the back surface." "The front surface (side)" or "the surface on the transparent surface-protecting layer (side)" of the decorative sheet or the decorative plate means the surface of the decorative sheet or the decorative plate to be viewed after the installation thereof.

Each of the layers mentioned above (a transparent base material layer, a picture pattern layer, a transparent adhesive layer, a transparent resin layer, a transparent surface-protecting layer, and a back-surface primer layer) is explained below.

### (Transparent base material layer)

The decorative sheet of the present invention contains a polyolefin resin as a resin component constituting a transparent base material layer. The transparent base material layer has a layer thickness of 10 to 250 µm and a Martens hardness of 20 to 30 N/mm². The transparent base material layer may be a single layer, or composed of a laminate of two or more layers formed by a film-formation method. When the transparent base material layer is composed of a laminate of two or more layers, with each layer containing a combination of various materials, such as transparent colorants and pearlescent pigments, designability as well as chipboard texture can be imparted when a decorative plate is formed. Furthermore, impression of depth and gradation that cannot be provided by a single layer can be imparted. When a transparent base material layer is a multilayer, the multilayer is formed so that each layer has a Martens hardness of 20 to 30 N/mm², and the total thickness of the layers is 10 to 250 µm.

The transparent base material layer is preferably a sheet comprising a polyolefin resin.

The polyolefin resin is not particularly limited, and polyolefin resins usually used in the field of decorative sheets can be used. Examples include polyethylene, polypropylene, polybutene, polymethylpentene, ethylene-propylene copolymers, ethylene-vinyl acetate copolymers, ethylene-acrylic acid copolymers, ethylene-propylene-butene copolymers, polyolefin-based thermoplastic elastomers, and the like. Among these, polypropylene, polyolefin-based thermoplastic elastomers, and the like are particularly preferable.

Homopolymers or copolymers comprising polypropylene as a main component are also preferable. Examples thereof include homopolypropylene resins, random polypropylene resins, block polypropylene resins, and copolymers comprising a crystalline polypropylene moiety and a C₂₋₂₀ α-olefin other than propylene. Propylene-α-olefin copolymers comprising at least 15 mole% of a comonomer of ethylene, butene-1,4-methylpentene-1, hexene-1, or octene-1 are also preferable.

Preferable polyolefin-based thermoplastic elastomers are those produced by mixing isotactic polypropylene as a hard segment with atactic polypropylene as a soft segment at a weight ratio of 80:20.

The polyolefin resin may be formed into a film by a method such as calendering, inflation, or T-die extrusion.

The thickness of the transparent base material layer may be within the range of 10 to 250 µm, and is particularly preferably 40 to 120 µm. When the thickness of the transparent base material layer is less than 10 µm, residual air bubbles between the decorative sheet and chipboard during the production of a decorative plate may not be suppressed. When the transparent base material layer has a thickness of more than 250 µm, impact resistance may be lowered.

The Martens hardness of the transparent base material layer is 20 to 30 N/mm². When the transparent base material layer has a Martens hardness of more than 60 Ns/mm², residual air bubbles between the decorative sheet and a chipboard during the production of a decorative plate may not be suppressed. The method for adjusting the Martens hardness of the transparent base material layer may be, for example, 1) mixing two or more types of polyolefin resins having different hardness; 2) mixing a polyolefin thermoplastic elastomer; or like methods to appropriately adjust the Martens hardness.

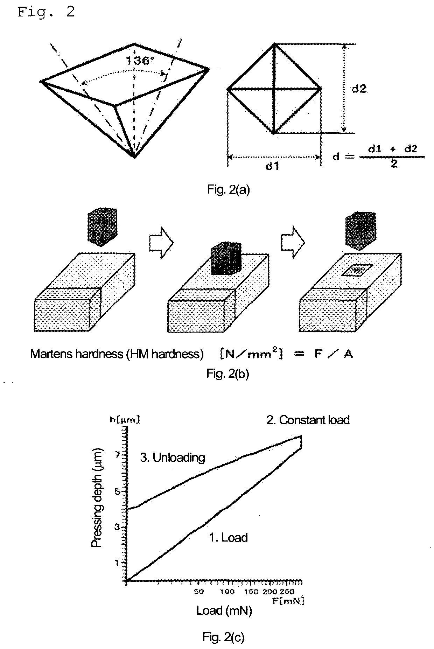

In the present specification, the Martens hardness is measured using a surface film physical property tester (PICODENTOR HM-500, produced by Fischer Instruments). The specific measurement method is as follows. In this measurement method, a diamond indenter (Vickers indenter) shown in Fig. 2(a) is pressed into a measuring sample, as shown in Fig. 2(b). The surface area A (mm²) is calculated from the length of the diagonal lines of the pyramidal cavity formed on the surface, and test load F (N) is divided by the surface area A to thereby determine the hardness. The pressing conditions are as follows. First, 0 to 5 mN load is applied for 10 seconds at room temperature (laboratory environmental temperature), as shown in Fig. 2(c). Next, 5 mN load is maintained for 5 seconds. Finally, unloading is performed from 5 to 0 mN for 10 seconds. Then, the hardness determined by F/A, wherein A is surface area and F is test load, is the Martens hardness mentioned above. In the present specification, in order to avoid the influence of the hardness of layers other than the layer whose Martens hardness is to be measured, the Martens hardness of the cross-section of the layer whose Martens hardness is to be measured was measured. In this case, the decorative sheet was embedded in a resin (cold-curing-type epoxy two-component curable resin), and cured by allowing it to stand at room temperature for 24 hours or more. Then, the cured embedded sample was mechanically polished to expose the cross-section of the layer whose Martens hardness is to be measured, and the diamond indenter was pressed into the cross-section (at the position where fine particles are not present if fine particles, such as inorganic fillers, are present in the layer to be measured) to thereby measure the Martens hardness of the cross-section of the surface to be measured.

The transparent base material layer may contain additives as long as transparency is ensured. Examples of additives include fillers, such as calcium carbonate and clay; flame retardants, such as magnesium hydroxide; antioxidants; lubricants; foaming agents; colorants (see below); etc. The amount of additives can be suitably determined according to product characteristics.

The colorant is not particularly limited, and known colorants, such as pigments and dyes, can be used. Examples include inorganic pigments, such as titanium white, zinc white, red oxide, vermillion, ultramarine blue, cobalt blue, titanium yellow, chrome yellow, and carbon black; organic pigments (including dyes), such as isoindolinone, hansa yellow A, quinacridone, permanent red 4R, phthalocyanine blue, indanthrene blue RS, and aniline black; metallic pigments, such as aluminum and brass; pearlescent (pearl) pigments comprising foil powder, such as titanium dioxide-coated mica and basic lead carbonate; etc.

One or both surfaces of the transparent base material layer may be subjected to a surface treatment, such as corona discharge treatment, ozone treatment, plasma treatment, ionizing radiation treatment, or dichromic acid treatment. For example, when a corona discharge treatment is performed, the treatment is performed so that the transparent base material layer has a surface tension of 30 dyne or more, and more preferably 40 dyne or more. The surface treatment may be performed in accordance with usual treatment methods.

If necessary, a primer layer (a primer layer for facilitating lamination of a picture pattern layer or chipboard) may be formed on the upper or back surface of the transparent base material layer.

The primer layer can be formed by applying a known primer agent to one or both surfaces of the transparent base material layer. Examples of primer agents include urethane resin-based primer agents comprising an acrylic modified urethane resin, primer agents comprising a urethane-cellulose-based resin (e.g., a resin produced by adding hexamethylene diisocyanate to a mixture of urethane and nitrocellulose), and the like.

The thickness of the primer layer is not particularly limited, but is generally about 0.1 to 10 µm, and preferably about 1 to 5 µm.

### Picture pattern layer

A picture pattern layer is formed on the transparent base material layer.

The picture pattern layer gives a desired picture (design) to the decorative sheet, and the type, etc. of picture are not limited. Examples thereof include wood grain patterns, marble grain patterns, pebbly patterns, tiled patterns, brick-masonry patterns, textile patterns, leather patterns, geometric figures, characters, symbols, abstraction patterns, and the like.

The method of forming the picture pattern layer is not particularly limited. For example, the picture pattern layer may be formed by a printing method that uses a color ink obtained by dissolving (or dispersing) a known colorant (dye or pigment) together with a binding resin in a solvent (or a dispersion medium), a coating agent, etc.

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminium powder and bronze powder; pearlescent pigments, such as titanium oxide-coated mica and bismuth chloride oxide; fluorescent pigments; noctilucent pigments; and the like. Such colorants may be used singly, or in a combination of two or more. These colorants may be used in combination with a filler (e.g., silica), an extender pigment (e.g., organic beads), a neutralizer, a surfactant, etc.

Examples of binding resins include acrylic-based resins, styrene-based resins, polyester-based resins, urethane-based resins, chlorinated polyolefin resins, vinyl chloride-vinyl acetate copolymer-based resins, polyvinyl butyral resins, alkyd-based resins, petroleum-based resins, ketone resins, epoxy-based resins, melamine-based resins, fluorine-based resins, silicone-based resins, cellulose derivatives, rubber resins, and the like. These binding resins can be used singly or in a combination of two or more.

Examples of the solvent (or dispersion medium) include petroleum-based organic solvents, such as hexane, heptane, octane, toluene, xylene, ethylbenzene, cyclohexane, and methylcyclohexane; ester-based organic solvents, such as ethyl acetate, butyl acetate, acetic acid-2-methoxyethyl, and acetic acid-2-ethoxyethyl; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) can be used singly or in a combination of two or more.

Examples of the printing method for forming the picture pattern layer include gravure printing, offset printing, screen printing, flexo printing, electrostatic printing, ink jet printing, etc. When a solid-like picture pattern layer is formed over the entire surface, various coating methods, such as roll coating, knife coating, air-knife coating, dye coating, lip coating, comma coating, kiss coating, flow coating, and dip coating, can be used. In addition to the above, usable examples include hand-drawing methods, marbling methods, photographic methods, transfer methods, laser beam drawing methods, electron beam drawing methods, metal partial deposition methods, etching methods, etc. Such methods may be used in combination with other methods.

The thickness of the picture pattern layer is not particularly limited, and can be suitably determined according to product characteristics. The layer thickness during coating is about 1 to 15 µm, and the layer thickness after drying is about 0.1 to 10 µm.

### Transparent adhesive layer

A transparent adhesive layer can be formed on the picture pattern layer.

The transparent adhesive layer is not particularly limited, as long as it is transparent. Any of colorless transparent, colored transparent, and translucent is included. The transparent adhesive layer can be formed to bond a picture pattern layer and a transparent resin layer.

The adhesive is not particularly limited, and any adhesive known in the field of decorative sheets can be used.

Examples of adhesives known in the field of decorative sheets include thermoplastic resins, such as polyamide resin, acrylic resin, and vinyl acetate resin; and curable resins such as thermosetting urethane resins. It is also possible to use a two-component curable polyurethane resin containing isocyanate as a curing agent or a polyester resin.

The adhesive layer can be formed, for example, by applying an adhesive to the picture pattern layer so as to apply a coating (adhesive) that forms a transparent resin layer, and then drying or curing. The conditions, such as drying temperature and drying time, are not particularly limited, and may be appropriately determined according to the type of adhesive. The method for applying an adhesive is not particularly limited. Examples of usable methods include roll coating, curtain flow coating, wire bar coating, reverse coating, gravure coating, gravure reverse coating, air-knife coating, kiss coating, blade coating, smooth coating, comma coating, and like coating methods.

Although the thickness of the adhesive layer is not particularly limited, the thickness after drying is about 0.1 to 30 µm, and preferably about 1 to 20 µm.

### Transparent resin layer

A transparent resin layer is formed on the picture pattern layer or on the transparent adhesive layer.

The decorative sheet of the present invention has a transparent resin layer containing a polyolefin resin as a resin component. The transparent resin layer has a Martens hardness of 100 N/mm² or less, and the Martens hardness of the transparent resin layer is greater than that of the transparent base material layer. More specifically, when the Martens hardness of the transparent base material layer is defined as H_{B} (N/mm²) and that of the transparent resin layer is defined as H_{R} (N/mm²), the decorative sheet of the present invention satisfies the conditions of "H_{R}≤100 and H_{B}<H_{R}." Further, the transparent resin layer is formed so that the total thickness of the transparent base material layer and the transparent resin layer falls in the range of 100 to 420 µm. The transparent resin layer may be a single layer or a laminate of two or more layers produced by a film-formation method. As in the transparent base material layer comprising two or more layers, when the transparent resin layer is composed of a laminate of two or more layers with a combination of various materials, such as a transparent colorant and a pearlescent pigment, being present in each layer, designability as well as chipboard texture can be imparted when a decorative plate is produced. Furthermore, better impression of depth and gradation that cannot be achieved by a single layer can be imparted. When the transparent resin layer is composed of a multilayer, each layer is adjusted to have a Martens hardness of 100 N/mm² or less, and the Martens hardness of the transparent resin layer is adjusted to be greater than that of the transparent base material layer.

Examples of usable polyolefin resins are the same as those of the transparent base material layer described above. Among the polyolefin resins, polypropylene is preferable. It is preferable that the transparent resin layer be substantially composed of a polypropylene resin.

The transparent resin layer can be formed, for example, by subjecting a polypropylene resin to calendering, inflation, T-die extrusion, or like methods. Ready-made films may also be used.

The Martens hardness of the transparent resin layer is 100 N/mm² or less, and is particularly preferably 30 to 40 N/mm². However, the Martens hardness of the transparent resin layer must be adjusted to be greater than that of the transparent base material layer. This provides an effect of suppressing residual air bubbles between a chipboard and the decorative sheet, while maintaining impact resistance and abrasion resistance. When the Martens hardness of the transparent resin layer exceeds 100 N/mm², the obtained sheet is uncomfortable to walk on and has lower impact resistance, and the sheet surface may tend to break. The lower limit of the Martens hardness of the transparent resin layer is preferably about 20 N/mm². Examples of the method for adjusting the Martens hardness of the transparent resin layer are the same as those for the transparent base material layer. The Martens hardness may be appropriately adjusted, for example, by 1) mixing two or more types of polyolefin resins having different hardnesses; 2) mixing a polyolefin thermoplastic elastomer; or like methods.

Although the layer thickness of the transparent resin layer is not limited, the thickness is adjusted so that the total thickness of the transparent base material layer and the transparent resin layer is 100 to 420 µm (preferably 120 to 200 µm). When the total thickness of both layers is less than 100 µm, abrasion resistance may lower. When the total thickness of both layers is more than 420 µm, the obtained sheet may be uncomfortable to walk on. In general, the thickness of the transparent resin layer may be selected from the range of 90 to 170 µm so as to satisfy the above conditions.

The transparent resin layer may contain a weather-resistant agent, if necessary. Examples of preferable weather-resistant agents include ultraviolet absorbers, hindered amine-based light stabilizers, and the like. These weather-resistant agents can be used singly, or in a combination of two or more. In particular, when the transparent resin layer contains polypropylene, incorporating weather-resistant agent(s) is preferable.

Examples of ultraviolet absorbers include benzophenone-based ultraviolet absorbers, benzotriazole-based ultraviolet absorbers, triazine-based ultraviolet absorbers, and the like. Examples of preferable light stabilizers include hindered amine-based light stabilizers. Although the content of these weather-resistant agents in the transparent resin layer is not limited, the transparent resin layer may contain an ultraviolet absorber and/or a light stabilizer in a concentration of about 1,000 to 10,000 mass ppm.

If necessary, the surface of the transparent resin layer may be subjected to a surface treatment, such as corona discharge treatment, ozone treatment, plasma treatment, ionizing radiation treatment, or dichromic acid treatment. The surface treatment can be performed in accordance with a usual method for each treatment.

A primer layer (a primer layer for facilitating the formation of a transparent surface-protecting layer) may be provided on the surface of the transparent resin layer.

The primer layer can be formed by applying a known primer agent to the transparent resin layer. Examples of primer agents include urethane resin primer agents comprising an acrylic-modified urethane resin, resin primer agents comprising a block copolymer of acrylic and urethane, and the like.

The thickness of the primer layer is not particularly limited, but is generally about 0.1 to 10 µm, and preferably about 1 to 5 µm.

### Gloss-adjusting layer

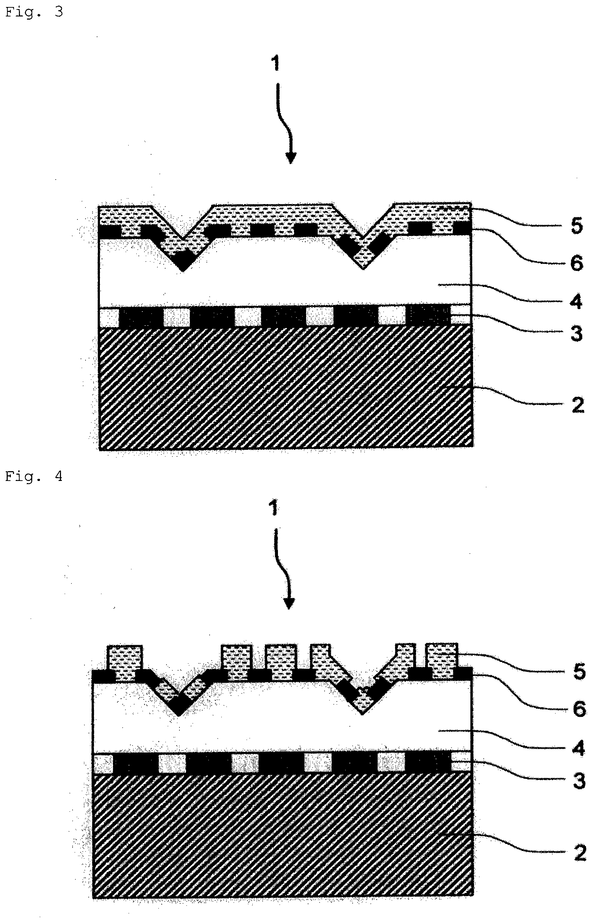

The decorative sheet of the present invention may comprise a gloss-adjusting layer. For example, Figs. 3 to 5 show embodiments of decorative sheets comprising a gloss-adjusting layer.

When the decorative sheet of the present invention comprises a gloss-adjusting layer, the gloss-adjusting layer is formed on the transparent resin layer so as to be adjacent to the transparent surface-protecting layer described below. More specifically, the back surface of the gloss-adjusting layer is adjacent to the front surface of the transparent resin layer (or the primer layer when the decorative sheet of the present invention has the primer layer), and the front surface and/or side surface of the gloss-adjusting layer are/is adjacent to the transparent surface-protecting layer.

In terms of designability, the gloss-adjusting layer may be formed (1) in part of the front surface (the surface of the decorative sheet or the decorative plate to be viewed after the installation thereof), or (2) on the entire front surface (entire surface). That is, the gloss-adjusting layer may be formed (1) partially on the front surface, or (2) entirely on the front surface.

When (1) the gloss-adjusting layer is formed on part of the front surface, (a) the transparent surface-protecting layer may be formed in part of the front surface, or (b) the transparent surface-protecting layer may be formed on the entire front surface. When the gloss-adjusting layer and the transparent surface-protecting layer are both formed in part of the front surface (in the case of (1) (a) above), the transparent surface-protecting layer is formed so as to cover a region in which the gloss-adjusting layer is not formed (a region in which the gloss-adjusting layer is not present).

In the embodiment of Fig. 3, the gloss-adjusting layer is formed in part of the front surface, and the transparent surface-protecting layer is formed on the entire front surface (embodiment (1) (b) above) . In the embodiment of Fig. 4, the gloss-adjusting layer is formed in part of the front surface, and the transparent surface-protecting layer is formed in part of the front surface (embodiment (1) (a) above).

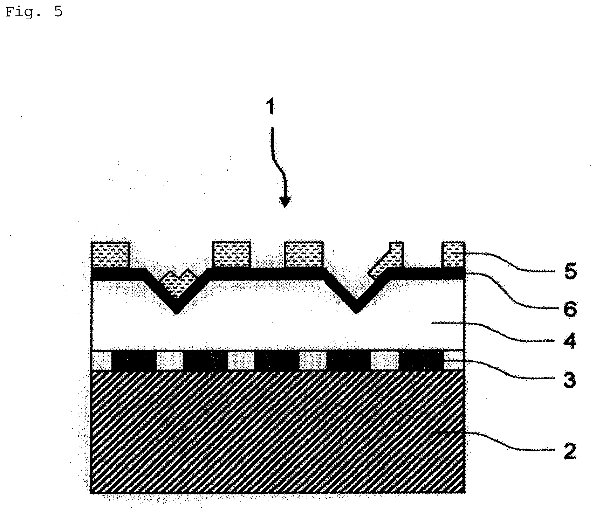

On the other hand, when (2) the gloss-adjusting layer is formed on the entire front surface, the transparent surface-protecting layer is formed in part of the front surface. In the embodiment of Fig. 5, the gloss-adjusting layer is formed on the entire front surface, and the transparent surface-protecting layer is formed in part of the front surface (embodiment (2) above).

Here, the gloss value of the gloss-adjusting layer is represented by G_{A}, and the gloss value of the transparent surface-protecting layer is represented by G_{P}. When the decorative sheet of the present invention has a gloss-adjusting layer, the relationship between the gloss value G_{A} of the gloss-adjusting layer and the gloss value G_{P} of the transparent surface-protecting layer described below is G_{P} ≠ G_{A}. The values G_{A} and G_{P} in the present specification are measured according to Japanese Industrial Standard JIS Z 8741. Specifically, in the present invention, the gloss value is measured by a gloss meter (PG-3D, produced by Nippon Denshoku Industries Co., Ltd.) at an incident angle of 60°. In the present specification, the gloss value (*tsuya chi*, in Japanese) is also called "*koutaku chi*" or "*gurosu chi*" in Japanese.

When (1) the gloss-adjusting layer is formed in part of the front surface, or when (2) the gloss-adjusting layer is formed on the entire front surface, the gloss-adjusting layer and the transparent surface-protecting layer are both viewed from the surface of the decorative sheet or the decorative plate to be viewed after the installation thereof, and the relationship between the gloss value of the gloss-adjusting layer and the gloss value of the transparent surface-protecting layer is G_{P} ≠ G_{A}. Therefore, when the decorative sheet of the present invention comprising a gloss adjustment layer is bonded to an adherend, the influence of unevenness formed on the surface of the decorative sheet (unevenness derived from surface unevenness of the adherend and called *daku*) is suppressed, and the designability of the decorative sheet or the decorative plate is enhanced. Accordingly, the decorative sheet of the present invention comprising a gloss-adjusting layer is a preferable embodiment of the present invention.

Next, the case (1) where the gloss-adjusting layer is formed in part of the front surface (this case is also simply referred to as "the case (1)") is described. In the case (1), it is preferable that the ratio of the area of a region in which the gloss-adjusting layer is formed, per cm² of the area of the front surface of the decorative sheet or the decorative plate be 20 to 80%. In this case, it is preferable that the gloss-adjusting layer be formed so that the front surface (the surface to be viewed) of the gloss-adjusting layer has a picture pattern. When the gloss-adjusting layer has a picture pattern, and the above-mentioned area ratio is 20 to 80%, the gloss difference between the gloss-adjusting layer and the transparent surface-protecting layer is more significant, and designability is consequently enhanced. In addition, it is possible to further suppress the influence of unevenness. When the gloss-adjusting layer is formed to have a picture pattern, the type of picture pattern is not particularly limited. Examples of the specific type of picture pattern include the same picture patterns as mentioned above as examples of the picture pattern layer.

In the present specification, the ratio of the area of a region in which the gloss-adjusting layer is formed (a region in which the gloss-adjusting layer is present), per cm² of the area of the front surface of the decorative sheet or the decorative plate, is also referred to as "the occupancy area ratio of the gloss-adjusting layer." The occupancy area ratio of the gloss-adjusting layer is calculated from plate-making data in the stage of producing a plate for forming the gloss-adjusting layer. The occupancy area ratio of the gloss-adjusting layer can also be calculated from the shape of the plate.

In the case (1), in order to further suppress the influence of unevenness (in order to make it further difficult to recognize unevenness), the relationship between G_{A} and G_{P} is preferably G_{A} < G_{P}, and more preferably G_{A} < G_{P} and G_{A} ≤ 5.

Next, the case (2) where the gloss-adjusting layer is formed on the entire front surface (this case is also simply referred to as "the case (2)") is described. In the case (2), the transparent surface-protecting layer is formed in part of the front surface. In this case, it is preferable that the transparent surface-protecting layer be formed so that the front surface (the surface to be viewed) of the transparent surface-protecting layer has a picture pattern. This further clarifies the gloss difference between the gloss-adjusting layer and the transparent surface-protecting layer. As a result, designability can be further enhanced, and the influence of unevenness can be further suppressed. When the transparent surface-protecting layer is formed to have a picture pattern, the type of picture pattern is not particularly limited. Examples of the specific type of picture pattern include the same picture patterns as mentioned above as examples of the picture pattern layer.

In the case (2), in order to further suppress the influence of unevenness (in order to make it more difficult to recognize unevenness), the relationship between G_{A} and G_{P} is preferably |G_{P}-G_{A}| ≥ 2, and more preferably |G_{P}-G_{A}| ≥ 10 (in other words, the difference between the gloss value of the gloss-adjusting layer and the gloss value of the transparent surface-protecting layer is preferably 2 or more, and this difference is preferably 10 or more). The relationship between G_{A} and G_{P} may be G_{A} < G_{P} or G_{P} < G_{A}. That is, the gloss of the gloss-adjusting layer may be lower than that of the transparent surface-protecting layer, or the gloss of the transparent surface-protecting layer may be lower than that of the gloss-adjusting layer (in the case of G_{A} < G_{P}, the gloss-adjusting layer is a less-gloss layer; and in the case of G_{P} < G_{A}, the transparent surface-protecting layer is a less-gloss layer). In the case (2), it is preferable that the ratio of the area of a region in which a less-gloss layer is present, per cm² of the area of the front surface of the decorative sheet or the decorative plate exceed 50%.

In the present specification, the ratio of the area of a region in which the transparent surface-protecting layer is formed (a region in which the transparent surface-protecting layer is present), per cm² of the area of the front surface of the decorative sheet or the decorative plate, is also referred to as "the occupancy area ratio of the transparent surface-protecting layer." The occupancy area ratio of the transparent surface-protecting layer is calculated from plate-making data in the stage of producing a plate for forming the transparent surface-protecting layer. The occupancy area ratio of the transparent surface-protecting layer can also be calculated from the shape of the plate. On the other hand, the ratio of the area of a region in which the less-gloss layer is exposed (the exposure area ratio of the less-gloss layer), per cm² of the area of the front surface of the decorative sheet or the decorative plate is obtained in the following manner:
(i) when the less-gloss layer is the transparent surface-protecting layer, the occupancy area ratio of the transparent surface-protecting layer is directly used as the occupancy area ratio of the less-gloss layer; or
(ii) when the less-gloss layer is the gloss-adjusting layer, the occupancy area ratio of the transparent surface-protecting layer is calculated, and then the occupancy area ratio of the transparent surface-protecting layer is subtracted from 100(%).

The method for forming the gloss-adjusting layer is not particularly limited. For example, similar to the picture pattern layer described above, the gloss-adjusting layer can be formed from ink obtained by dissolving (or dispersing) a known colorant (a dye, a pigment, etc.), a vehicle, etc., in a solvent (or a dispersion medium) . The colorant and the solvent can be the same colorant and solvent mentioned above as examples of the colorant and solvent in the picture pattern layer.

The vehicle for the ink forming the gloss-adjusting layer is preferably one containing 50 mass% or more of urethane-based resin and/or polyvinyl acetal-based resin. Examples of urethane-based resins include urethane resins obtained by reacting a polyol component, which is a polyol, such as acrylic polyol, polyester polyol, or polyether polyol, and an isocyanate component, which is an isocyanate, such as an aromatic isocyanate (e.g., tolylene diisocyanate, xylene diisocyanate, or diphenylmethane diisocyanate), or an aliphatic or alicyclic isocyanate (e.g., isophorone diisocyanate, hexamethylene diisocyanate, or hydrogenated tolylene diisocyanate) (both linearly crosslinked resins and mesh-like crosslinked resins can be used). Moreover, polyvinyl acetal-based resins are obtained by condensation (acetalization) of polyvinyl alcohols and aldehydes. Examples of polyvinyl acetal resins include polyvinyl formal (formal resin), polyvinyl acetoacetal, polyvinyl propional, polyvinyl butyral (butyral resin), polyvinyl hexylal, and the like. Among these, polyvinyl butyral is particularly preferred, because it is soluble in a solvent and easily formed into an ink; and the appearance of a feeling of visual unevenness (visual recognition as recesses) is excellent.

Further, in order to adjust the gloss value, a gloss-control resin, such as an unsaturated polyester resin, an acrylic resin, or a vinyl chloride-vinyl acetate copolymer, may be mixed, as required. When a gloss-control resin is used, the mixing ratio thereof is preferably within the range of 10 to 50 mass% based on the total weight of the vehicle. The ink forming the gloss-adjusting layer may be colorless, or colored by adding a colorant, such as a pigment.

Further, an extender pigment may be mixed in the ink for forming the gloss-adjusting layer. When an extender pigment is mixed, scattering of light can be promoted, and the effect of removing unevenness (*daku*) can be further enhanced. The extender pigment is not particularly limited. For example, it is suitably selected from silica, talc, clay, barium sulfate, barium carbonate, calcium sulfate, calcium carbonate, magnesium carbonate, etc. Preferred among these is silica, which is a material that has a high degree of freedom in material design, including oil absorbency, particle size, pore volume, etc., and that has excellent designability, whiteness, and coating stability as ink; silica fine particles are particularly preferred. When an extender pigment is used, the content thereof is preferably 5 to 15 parts by mass based on 100 parts by mass of the ink (ink composition) other than the extender pigment.

The gloss value G_{A} of the gloss-adjusting layer can be adjusted, for example, by a method to select the type of each of the substances, such as the above-mentioned vehicle, gloss-control resin, and colorant (including an extender pigment), or a method to suitably determine the content of each of the above substances.

Examples of the printing method for forming the gloss-adjusting layer include gravure printing, offset printing, screen printing, flexo printing, electrostatic printing, ink jet printing, etc., similar to the printing method for forming the picture pattern layer mentioned above. Moreover, when a solid-like gloss-adjusting layer is formed on the entire surface, the same coating methods used to form the picture pattern layer can be used.

When the gloss-adjusting layer is formed in part of the front surface (in the case (1)), it is preferable that the gloss-adjusting layer have a picture pattern. In particular, it is more preferable that the gloss-adjusting layer be formed in a pattern shape, such as a dot, lattice, or wood-grain vessel pattern (shape). Because the gloss-adjusting layer is formed in the above pattern, a further difference is made between the gloss of a region in which the gloss-adjusting layer is present and the gloss of a region other than the gloss-adjusting layer (a region in which the gloss-adjusting layer is not present). As a result, an optical illusion of recesses is generated, and such an optical illusion is recognized as a peculiar cubic effect. Therefore, unevenness (*daku*) is much less noticeable.

When the picture pattern layer is formed in the decorative sheet of the present invention, it is preferable that a gloss-adjusting layer be formed so as to be linked (synchronized) with the pattern of the picture pattern layer. For example, when the picture pattern layer is formed in a wood-grain pattern, a decorative sheet having more excellent designability can be obtained by forming a gloss-adjusting layer by pattern-printing of a wood-grain vessel pattern.

The thickness (film thickness) of the gloss-adjusting layer is preferably 0.5 µm to 5 µm, in consideration of printability and interaction with the transparent surface-protecting layer-forming resin composition.

### Transparent surface-protecting layer

The transparent surface-protecting layer is formed on the transparent resin layer.

When the decorative sheet of the present invention has the gloss-adjusting layer, the transparent surface-protecting layer is formed adjacent to the gloss-adjusting layer described above. Specifically, the back surface and/or side surface of the transparent surface-protecting layer are/is adjacent to the gloss-adjusting layer.

The decorative sheet of the present invention is provided with a transparent surface-protecting layer containing an ionizing radiation-curable resin as a transparent surface-protecting layer. It is preferable that the transparent surface-protecting layer be substantially composed of an ionizing radiation-curable resin.

Ionizing radiation-curable resins are not particularly limited. Usable examples thereof include transparent resins comprising, as a main component, one or more prepolymers (including oligomers) and/or one or more monomers that contain, in the molecule, a radically polymerizable double bond that can undergo the crosslinking polymerization reaction by irradiation of ultraviolet rays, electron beams, or like ionizing radiation. These prepolymers or monomers can be used singly or in a combination of two or more. The curing reaction is generally conducted through a crosslinking curing reaction.

Specific examples of the prepolymers or monomers are compounds that contain, in the molecule, a radically polymerizable unsaturated group, such as a (meth)acryloyl group or (meth)acryloyloxy group; a cation-polymerizable functional group, such as an epoxy group; etc. Furthermore, polyene/thiol-based prepolymers comprising polyene and polythiol in combination are also preferable. In this specification, a (meth)acryloyl group means an acryloyl group or a methacryloyl group.

Examples of prepolymers comprising a radically polymerizable unsaturated group include polyester (meth)acrylate, urethane (meth)acrylate, epoxy (meth)acrylate, melamine (meth)acrylate, triazine (meth)acrylate, silicone (meth)acrylate, and the like. It is preferable that such prepolymers generally have a molecular weight of about 250 to 100,000.

Examples of monomers comprising a radically polymerizable unsaturated group include monofunctional monomers, such as methyl(meth)acrylate, 2-ethylhexyl(meth)acrylate, phenoxyethyl(meth)acrylate, and the like. Moreover, examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

Examples of prepolymers comprising a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate, pentaerythritol tetrathioglycolate, etc. Examples of polyenes include polyurethanes formed of diol and diisocyanate, wherein an allyl alcohol is added to each end thereof.

Electromagnetic waves or charged particles with sufficient energy to activate a curing reaction of the molecules in the ionizing radiation-curable resin (composition) are usable as the ionizing radiation to cure the ionizing radiation-curable resin. Ultraviolet rays or electron beams are generally used, and visible light, X-rays, ionic rays, and the like may also be used.

Examples of ultraviolet ray sources include light sources such as ultra-high pressure mercury lamps, high pressure mercury lamps, low pressure mercury lamps, carbon arc lamps, black lights, and metal halide lamps. It is usually preferable that the wavelength of the ultraviolet rays be 190 to 380 nm.

Examples of electron beam sources include various electron beam accelerators, such as a Cockcroft-Walton accelerator, Van de Graaff accelerator, resonance transformer accelerators, insulation-core-transformer-type accelerators, linear accelerators, dynamitron accelerators, and high-frequency accelerators. Among these, electron beam sources capable of irradiating electrons with an energy of 100 to 1000 keV, preferably 100 to 300 keV, are preferable.

The transparent surface-protecting layer may contain various additives, such as weather-resistant agents, plasticizers, stabilizers, fillers, dispersants, colorants (e.g., dyes and pigments), and solvents, as required. When a weather-resistant agent is used, the kind and content of the weather-resistant agent may be the same as described above in the transparent resin layer.

The transparent surface-protecting layer can be formed, for example, by applying an ionizing radiation-curable resin to the transparent resin layer or the gloss-adjusting layer by a known coating method, such as gravure coating or roll coating, and then curing the resin. The ionizing radiation-curable resin is cured by electron beam irradiation. When a transparent surface-protecting layer is formed in part of the front surface of the decorative sheet, the transparent surface-protecting layer can be formed by partially (e.g., in a pattern shape) applying the transparent surface-protecting layer-forming resin composition, and then curing the ionizing radiation-curable resin in the resin composition. In contrast, when a transparent surface-protecting layer is formed on the entire front surface of the decorative sheet, the transparent surface-protecting layer can be formed by applying the transparent surface-protecting layer-forming resin composition to the entire surface (across the entire surface), and then curing the ionizing radiation-curable resin in the resin composition.

The gloss value G_{P} of the transparent surface-protecting layer can be adjusted, for example, by a method to select the type of each of the substances, such as resin components and additives, contained in the transparent surface-protecting layer, or a method to suitably determine the content of each of the above substances.

The thickness of the transparent surface-protecting layer is not particularly limited, and can be suitably determined according to the final product characteristics. The transparent surface-protecting layer usually has a thickness of 0.1 to 50 µm, and preferably about 1 to 20 µm.

### Embossing

The decorative sheet may be embossed from the outermost surface layer side, as required.

The embossing method is not particularly limited. In a preferable method, for example, the front surface of the transparent surface-protecting layer is softened by heating, and pressed and shaped using an embossing plate, followed by cooling. Depending on the material of the decorative sheet, which is a final product, or the transparent surface-protecting layer, for example, the front surface of the transparent resin layer or the gloss-adjusting layer may be softened by heating, and pressed and shaped using an embossing plate, and then a transparent surface-protecting layer may be formed thereon.

The embossing is conducted using a known sheet-fed or rotary embossing machine. Examples of irregular shapes include wood-grain vessel patterns, stone-sheet surface concave-convex patterns (granite cleavage planes etc.), textile surface textures, matte patterns, grain patterns, hairline patterns, linear streak patterns, etc.

### Decorative plate

The decorative sheet of the present invention can be preferably used for producing a decorative plate by being laminated on an adherend. The decorative plate of the present invention can be obtained by laminating the decorative sheet of the present invention on an adherend so that the transparent surface-protecting layer of the decorative sheet of the present invention is the outermost surface layer.

Examples of the adherend include wood boards (chipboards, wood fiberboards (MDF, HDF, etc.) and combinations of these with wood single panels or plywood panels). Among these adherends, even when a chipboard (ten-point average roughness Rzⱼᵢₛ: about 80 to 250 µm), or a composite base material having a chipboard on the surface is used, residual air bubbles between the decorative sheet and the chipboard are suppressed, and the obtained decorative plate has good impact resistance, abrasion resistance, and walking feeling. The above ten-point average roughness Rzⱼᵢₛ is a value measured according to JIS B 0601-2001.

The shape of the adherend may usually be a flat plate in consideration of the installation on the flooring etc.

The decorative sheet can be bonded to an adherend by using an adhesive. Examples of adhesives include known adhesives containing, as active ingredients, polyvinyl acetate, polyvinyl chloride, vinyl chloride-vinyl acetate copolymer, ethylene-acrylic acid copolymer, ionomer, butadiene-acrylonitrile rubber, neoprene rubber, natural rubber, urethane reactive hot-melt adhesives (PUR), and the like. When the decorative sheet is bonded to an adherend, a bonding machine, such as a cold press, hot press, roll press, laminator, lapping machine, edge-bonding machine, or vacuum press, can be used.

After the decorative sheet is bonded to the adherend, the resulting product may be, for example, cut, formed into a tongue and groove joint using a tenoner, grooved into a V-shape, chamfered on four sides (e.g., C chamfered), etc., according to final product characteristics.

The decorative plate of the present invention may have grooved portion(s) or chamfered portion(s) extending from the decorative sheet side to the adherend. The groove portion and the chamfered portion may be coated with a color coating composition.

The color coating composition for coating the grooved portion and the chamfered portion may be, for example, an ink obtained by dissolving or dispersing in a vehicle a colorant that can also be used for the adhesive layer. Examples of colorants are the same as described above. Examples of vehicles include chlorinated polyolefins such as chlorinated polyethylene and chlorinated polypropylene; polyesters; polyurethanes comprising an isocyanate and a polyol; polyacrylics; polyvinyl acetate; polyvinyl chloride; polyvinyl chloride-polyvinyl acetate copolymers; cellulose resins; polyamide resins; and the like. These vehicles can be used singly, or in a combination of two or more. As described above, a color coating composition containing a curing agent, such as an isocyanate, which is chemically bound to a silanol group of a modified resin layer, is preferably used. Other additives, such as solvents and auxiliary agents, may also be added.

### Examples

The present invention is described in detail below with reference to Examples and Comparative Examples. However, the present invention is not limited to these Examples.

### Examples 1 to 2 and Comparative Examples 1 to 3

### Production of decorative sheet

After a transparent base material layer (40 µm in layer thickness, random PP, Martens hardness: 20 N/mm²; for details, see Table 1) was subjected to a corona discharge treatment, a picture pattern layer with a wood-grain vessel pattern (layer thickness: 2 µm) was formed on a transparent base material layer, and a back surface primer layer (layer thickness: 2 µm) was formed on the back surface of the transparent base material layer.

A transparent adhesive layer (layer thickness: 3 µm) was formed on the picture pattern layer. A transparent thermoplastic polyolefin (for details, see Table 1) was hot-melt extruded on the transparent adhesive layer using a T-die extruder to form a transparent resin layer (thickness: 60 µm).

Further, a primer layer (layer thickness: 2 µm) was formed on the transparent resin layer, and an ionizing radiation-curable resin was coated on the primer layer to a thickness of 15 µm by gravure coating, and dried to form an uncured ionizing radiation-curable resin layer. Then, the uncured ionizing radiation-curable resin layer was irradiated with an electron beam in an atmosphere at an oxygen concentration of 100 ppm under the conditions of an acceleration voltage of 165 kV and an irradiation dose of 5 Mrad (50 kGy) to form a transparent surface-protecting layer (layer thickness as shown in Table 1). Further, the transparent surface-protecting layer side was heated with a non-contact-type infrared heater to thereby soften the transparent base material sheet and the transparent resin layer, and embossing was immediately conducted to form an embossed pattern (wood-grain irregular pattern) on the surface-protecting layer. Each decorative sheet was thus obtained. When the gloss value (incident angle: 60°) of the transparent surface-protecting layer of Example 1 was measured by using a PG-3D (produced by Nippon Denshoku Industries Co., Ltd.), the gloss value (G_{P}) was 13.

### Example 3

First, a back-surface primer layer, a transparent base material layer, a picture pattern layer, a transparent adhesive layer, a transparent resin layer, and a primer layer were formed. Each layer was formed in the same manner as in Example 1.

Next, a patterned gloss-adjusting layer was formed on the front surface of the primer layer so that the ratio of the area of the gloss-adjusting layer per cm² of the surface of the decorative sheet on the transparent surface-protecting layer side was 50% (the occupancy area ratio of the gloss-adjusting layer when viewed from the front surface of the finally produced decorative sheet was 50%). The gloss-adjusting layer was formed by applying matte ink (a printing ink composition containing 10 parts by mass of silica particles based on 100 parts by mass of polyester urethane-based printing ink having a number average molecular weight of 3,000 and a glass transition temperature (Tg) of -62.8°C) in a wood-grain vessel pattern by a gravure printing method so that the thickness of the gloss-adjusting layer after drying was 2 µm.

Subsequently, a transparent surface-protecting layer was formed on the entire surface of the gloss-adjusting layer, and then an embossed pattern was further formed on the transparent surface-protecting layer side. The transparent surface-protecting layer and the embossed pattern were each formed in the same manner as in Example 1.

A decorative sheet of Example 3 was obtained in this manner.

The gloss value (G_{A}) measured when the gloss-adjusting layer was irradiated with light at an incident angle of 60° before applying the transparent surface-protecting layer-forming resin composition was 2. Separately from the above decorative sheet, a decorative sheet that was the same as the decorative sheet of Example 3, except that a gloss-adjusting layer was not formed, was prepared for measuring the gloss value of the transparent surface-protecting layer. The gloss value (G_{P}) measured when the transparent surface-protecting layer of the decorative sheet for measurement was irradiated with light at an incident angle of 60° was 13. The gloss values (incident angle: 60°) of the gloss-adjusting layer and the transparent surface-protecting layer in the decorative sheet of Example 3 were determined by the above respective gloss values. The gloss values (incident angle: 60°) were measured by using a PG-3D (produced by Nippon Denshoku Industries Co., Ltd.).

### Example 4

First, a back-surface primer layer, a transparent base material layer, a picture pattern layer, a transparent adhesive layer, a transparent resin layer, and a primer layer were formed. Each layer was formed in the same manner as in Example 1.

Then, a gloss-adjusting layer (thickness after drying: 2 µm) was formed on the entire front surface of the primer layer. In the formation of the gloss-adjusting layer, the same ink as the matte ink used in Example 3 was used.

Next, a patterned transparent surface-protecting layer was formed on the gloss-adjusting layer so that the ratio of the area of the transparent surface-protecting layer per cm² of the surface of the decorative sheet on the transparent surface-protecting layer side was 30% (the ratio of the area of a region in which the gloss-adjusting layer was exposed (the exposure area ratio of the less-gloss layer) was 70%). In the formation of the transparent surface-protecting layer, the same resin composition as the transparent surface-protecting layer-forming resin composition used in Example 1 was used. Curing of the electron beam-curable resin was also performed in the same manner as in Example 1.

Subsequently, an embossed pattern was formed on the transparent surface-protecting layer side. The embossed pattern was formed in the same manner as in Example 1.

The decorative sheet of Example 4 was thus obtained.

The gloss value (G_{A}) measured when the gloss-adjusting layer was irradiated with light at an incident angle of 60° before applying the transparent surface-protecting layer-forming resin composition was 2. Separately from the above decorative sheet, a decorative sheet that was the same as the decorative sheet of Example 4, except that a gloss-adjusting layer was not formed, was prepared for measuring the gloss value of the transparent surface-protecting layer. The gloss value (G_{P}) measured when the transparent surface-protecting layer of the decorative sheet for measurement was irradiated with light at an incident angle of 60° was 13. The gloss values (incident angle: 60°) of the gloss-adjusting layer and the transparent surface-protecting layer in the decorative sheet of Example 4 were determined by the above respective gloss values. The gloss values (incident angle: 60°) were measured by using a PG-3D (produced by Nippon Denshoku Industries Co., Ltd.).

### Examples 5 to 12

A back-surface primer layer, a transparent base material layer, a picture pattern layer, a transparent adhesive layer, a transparent resin layer, a primer layer, and a transparent surface-protecting layer were formed in the same manner as in Example 1. Tables 3 and 4 show the type, thickness, and Martens hardness of each transparent base material layer and transparent resin layer. Further, an embossed pattern was formed on the transparent surface-protecting layer side in the same manner as in Example 1 to form a decorative sheet.

### Properties of the decorative sheets and decorative plates

The impact resistance and abrasion resistance of each of the decorative sheets produced above (Examples 1 to 12 and Comparative Examples 1 to 3) were investigated. The laminatability (presence of residual air bubbles) when each of the decorative sheets produced above was laminated on a chipboard (a corkboard, ten-point mean roughness Rzⱼᵢₛ: 150 µm), as well as walking feeling, was investigated. Further, the surface state of the decorative plate and designability when each of the decorative sheets (Examples 1, 3 and 4) produced above were laminated on an adherend having a greater surface roughness were also investigated. Each test method and evaluation results are shown below.

### Impact resistance (Du Pont impact test)

The impact resistance was evaluated in accordance with the Du Pont impact test of JIS K 5600. A punch having a hemispherical tip with a radius of 6.3 mm was placed on the surface of each decorative sheet, and an evaluation was conducted after a weight with a load of 500 g was dropped onto the punch from a height of 300 mm or 500 mm.

The evaluation criteria are as follows.
A+: When the weight was dropped from a height of 500 mm, no cracking was observed on the decorative sheet.
A: When the weight was dropped from a height of 300 mm, no cracking was observed on the decorative sheet.
B: When the weight was dropped from a height of 300 mm, slight cracking was observed on the decorative sheet.
C: When the weight was dropped from a height of 300 mm, clear cracking was observed.

### Abrasion resistance (Taber abrasion resistance test)

The abrasion resistance was tested using a Taber abrader (produced by Rigaku Corporation) with an abrasive wheel (S-42) under a load of 1 kg, and evaluated based on the number of revolutions before half of the picture pattern layer was abraded.
A+: 4,000 revolutions or more
A: 1,000 revolutions or more
C: less than 1,000 revolutions

### Laminatability

An emulsion adhesive (BA-10 (main agent): BA-11B (curing agent), produced by Chirika Co., Ltd. was applied to a chipboard (corkboard) in an amount of 6 to 7 g/30 cm², and a decorative sheet was laminated thereon. After the obtained decorative plate was cured at room temperature under a load of 20 kg/ 30 cm² for three days, the surface state of the decorative plate was visually observed.
A: No residual air bubbles between the decorative sheet and the chipboard.
B: A few residual air bubbles between the decorative sheet and the chipboard.
C: Residual air bubbles between the decorative sheet and the chipboard.

### Walking feeling

Ten randomly selected people were asked to walk on the decorative plate produced and evaluate the decorative plate for ease to walk on, compared with a general sliced veneer floor ("Diamond Floor HA8" by Toyotex Co., Ltd.). The ease to walk on (response of the flooring material to the walker upon stepping on the floor) was evaluated.
A: The decorative plate was easy to walk on compared with the sliced veneer floor.
B: The decorative plate was as easy to walk on as the sliced veneer floor.
C: The decorative plate was not as easy to walk on as the sliced veneer floor.

### Surface state of decorative plate (evaluation of suppression of appearance of surface unevenness of adherend having greater surface roughness)

An adherend having a surface roughness greater than that of a corkboard (an adherend having a surface roughness Rz at least two times greater than that of a general adherend) was prepared. Next, an aqueous emulsion adhesive (Rikabond BA-10L (main agent): BA-11B (curing agent), produced by Chirika Co., Ltd.) was applied to the adherend in an amount of 6 to 7 g/30 cm², and the decorative sheets of Examples 1, 3, and 4 were each laminated thereon, followed by curing at room temperature for three days, thereby producing decorative plates. The surface state of each decorative plate was visually observed, and evaluated according to the following evaluation criteria. In the following evaluation criteria, an evaluation of B or higher indicates that the surface state is unproblematic in practical use.
A+: Unevenness of the adherend does not appear.
A: Unevenness of the adherend barely appears.
B: Unevenness of the adherend slightly appears.
C: Unevenness of the adherend appears more clearly than in evaluation B above.

### Evaluation of designability of decorative sheet

First, decorative plates were produced in the same manner as described in "(Evaluation of) surface state of decorative plate" above. Then, the appearance of each decorative plate was observed by 20 adult men and women, and whether a wooden texture was expressed was evaluated according to the following evaluation criteria. In the following evaluation criteria, an evaluation of B or higher indicates that the surface state is unproblematic in practical use.
A+: 90% or more of adult men and women determined that a wooden texture was expressed.
A: 70% or more of adult men and women determined that a wooden texture was expressed.
B: 50% or more of adult men and women determined that a wooden texture was expressed.
C: Less than 50% of adult men and women determined that a wooden texture was expressed.

**Table 1**

| | | Comparative Example 1 | Example 1 | Comparative Example 2 | Example 2 | Comparative Example 3 |
|---|---|---|---|---|---|---|
| Transparent surface-protecting layer | Layer thickness: µm | 15 | 15 | 15 | 15 | 15 |
| Transparent resin layer | Type of resin | PP resin A | PP resin A | PP resin B | PP resin A | PP resin A |
| | Layer thickness: µm | 40 | 60 | 80 | 160 | 300 |
| | Martens hardness: N/mm² | 30 | 30 | 20 | 30 | 30 |
| Transparent base material layer | Type of resin | PP resin B | PP resin B | PP resin C | PP resin B | PP resin B |
| | Layer thickness: µm | 40 | 40 | 80 | 250 | 200 |
| | Martens hardness: N/mm² | 20 | 20 | 50 | 20 | 20 |
| Impact resistance | | C | A | A | A+ | A+ |
| Abrasion resistance | | C | A | A | A+ | A+ |
| Laminatability onto the chipboard | | A | A | C | A | A |
| Walking feeling | | A | A | A | B | C |

**Table 2**

| | | Example 1 | Example 3 | Example 4 |
|---|---|---|---|---|
| Transparent surface-protecting layer | Thickness (µm) | 15 | 15 | 15 |
| | Occupancy area ratio of the surface-protecting layer (%) | 100 | 100 | 30 |
| | Gloss value (60°) GP | 13 | 13 | 13 |
| Gloss-adjusting layer | Thickness (µm) | - | 2 | 2 |
| | Occupancy area ratio of the gloss-adjusting layer (%) | - | 50 | 100 |
| | Gloss value (60°) GA | - | 2 | 2 |
| Transparent resin layer | Kind of resin | PP resin A | PP resin A | PP resin A |
| | Thickness (µm) | 60 | 60 | 60 |
| | Martens hardness (N/mm²) | 30 | 30 | 30 |
| Transparent base material layer | Kind of resin | PP resin B | PP resin B | PP resin B |
| | Thickness (µm) | 40 | 40 | 40 |
| | Martens hardness (N/mm²) | 20 | 20 | 20 |
| Surface state of the decorative plate | | B | A+ | A |
| Designability | | B | A | A+ |

**Table 3**

| | | Example 5 | Example 6 | Example 7 | Example 8 |
|---|---|---|---|---|---|
| Transparent surface-protecting layer | Thickness (µm) | 15 | 15 | 15 | 15 |
| Transparent resin layer | Type of resin | PP resin A | PP resin A | PP resin A | PP resin A |
| | Thickness (µm) | 100 | 150 | 60 | 60 |
| | Martens hardness (N/mm²) | 30 | 30 | 30 | 30 |
| Transparent base material layer | Type of resin | PP resin B | PP resin B | PP resin B | PP resin B |
| | Thickness (µm) | 60 | 60 | 100 | 150 |
| | Martens hardness (N/mm²) | 20 | 20 | 20 | 20 |
| Impact resistance | | A+ | A+ | A | A |
| Abrasion resistance | | A | A | A | A |
| Laminatability on the chipboard | | A | A | A | A |
| Walking feeling | | A | A | A | B |

**Table 4**

| | | Example 9 | Example 10 | Example 11 | Example 12 |
|---|---|---|---|---|---|
| Transparent surface-protecting layer | Thickness (µm) | 15 | 15 | 15 | 15 |
| Transparent resin layer | Type of resin | PP resin C | PP resin C | PP resin D | PP resin D |
| | thickness (µm) | 100 | 100 | 100 | 100 |
| | Martens hardness (N/mm²) | 60 | 60 | 100 | 100 |
| Transparent base material layer | Type of resin | PP resin B | PP resin A | PP resin B | PP resin C |
| | Thickness (µm) | 60 | 60 | 60 | 60 |
| | Martens hardness (N/mm²) | 20 | 30 | 20 | 60 |
| Impact resistance | | A | A | A | B |
| Abrasion resistance | | A | A | A | A |
| Laminatability on the chipboard | | A | A | A | B |
| Walking feeling | | A | A | B | B |

(The types of PP resins in Tables 1 to 4 are as follows.
PP resin A: Random polypropylene resin
PP resin B: Polyolefin thermoplastic elastomer
PP resin C: Homopolypropylene resin)

### Description of the Reference Numerals

1. Decorative sheet
2. Transparent base material layer
3. Picture pattern layer
4. Transparent resin layer
5. Transparent surface-protecting layer
6. Gloss-adjusting layer

## Claims

1. A decorative sheet for lamination on a base material, the base material comprising a chipboard on the surface,
the decorative sheet comprising a transparent base material layer and at least a transparent resin layer and an ionizing radiation-curable transparent surface-protecting layer disposed above the transparent base material layer, and comprising a picture pattern layer between the transparent base material layer and the transparent resin layer,
(1) the transparent base material layer and the transparent resin layer both containing a polyolefin resin;
(2) the transparent base material layer having a layer thickness of 10 to 250 µm and a Martens hardness of 20 to 30 N/mm², wherein the Martens hardness is measured according to the description;
(3) the transparent resin layer having a Martens hardness of 100 N/mm² or less, and the Martens hardness of the transparent resin layer being greater than that of the transparent base material layer; and
(4) the total thickness of the transparent base material layer and the transparent resin layer being 100 to 420 µm.

2. The decorative base sheet according to claim 1, wherein the transparent base material layer comprises a laminate of two or more layers.

3. The decorative sheet according to claim 1 or 2, wherein the transparent resin layer comprises a laminate of two or more layers.

4. The decorative sheet according to any one of claims 1 to 3, wherein a gloss-adjusting layer is formed on the transparent resin layer, and the gloss-adjusting layer is formed adjacent to the transparent surface-protecting layer.

5. A decorative plate obtained by laminating the decorative sheet according to any one of claims 1 to 4 to an adherend, the adherend being a chipboard or a composite base material having a chipboard on its surface.

6. The decorative plate according to claim 5, wherein the chipboard has a ten-point average roughness Rzⱼᵢₛ of 80 to 250 µm, the ten-point average roughness Rzⱼᵢₛ being a value measured according to JIS B 0601-2001.

7. The decorative plate according to claim 6, which is a decorative plate for floors.

## Patentansprüche

1. Dekorative Folie zur Laminierung auf ein Basismaterial, wobei das Basismaterial eine Spanplatte auf der Oberfläche umfaßt, wobei die dekorative Folie eine transparente Basismaterialschicht und mindestens eine transparente Harzschicht und eine mit ionisierender Strahlung härtbare transparente Oberflächenschutzschicht, angeordnet über der transparenten Basismaterialschicht, umfaßt, und eine Bildmusterschicht zwischen der transparenten Basismaterialschicht und der transparenten Harzschicht umfaßt,
wobei
(1) die transparente Basismaterialschicht und die transparente Harzschicht beide ein Polyolefinharz enthalten,
(2) die transparente Basismaterialschicht eine Schichtdicke von 10 bis 250 µm und einer Martens-Härte von 20 bis 30 N/mm² aufweist, wobei die Martens-Härte gemäß der Beschreibung gemessen wird,
(3) die transparente Harzschicht eine Martens-Härte von 100 N/mm² oder weniger aufweist und die Martens-Härte der transparenten Harzschicht größer ist als diejenige der transparenten Basismaterialschicht, und
(4) die Gesamtdicke der transparenten Basismaterialschicht und der transparenten Harzschicht 100 bis 420 µm beträgt.

2. Dekorative Basisfolie gemäß Anspruch 1, wobei die transparente Basismaterialschicht ein Laminat von zwei oder mehreren Schichten umfaßt.

3. Dekorative Folie gemäß Anspruch 1 oder 2, wobei die transparente Harzschicht ein Laminat von zwei oder mehreren Schichten umfaßt.

4. Dekorative Folie gemäß einem der Ansprüche 1 bis 3, wobei eine Glanz-einstellende Schicht auf der transparenten Harzschicht gebildet ist und die Glanz-einstellende Schicht angrenzend an die transparente Oberflächenschutzschicht gebildet ist.

5. Dekorplatte, erhalten durch Laminieren der Dekorfolie gemäß einem der Ansprüche 1 bis 4 auf eine Klebefläche, wobei die Klebefläche eine Spanplatte oder ein Verbundbasismaterial mit einer Spanplatte auf dessen Oberfläche ist.

6. Dekorplatte gemäß Anspruch 5, wobei die Spanplatte eine Zehnpunktdurchschnittsrauigkeit Rzⱼᵢₛ von 80 bis 250 µm aufweist, wobei die Zehnpunktdurchschnittsrauigkeit Rzⱼᵢₛ ein Wert gemessen gemäß JIS B 0601-2001 ist.

7. Dekorplatte gemäß Anspruch 6, welche eine Dekorplatte für Fußböden ist.

## Revendications

1. Feuille décorative pour stratification sur une matière de base, la matière de base comprenant un carton sur la surface,
la feuille décorative comprenant une couche de matière de base transparente et au moins une couche de résine transparente et une couche transparente de protection de surface pouvant durcir au rayonnement ionisant disposée au-dessus de la couche de matière de base transparente et comprenant une couche de motif à images entre la couche de matière de base transparente et la couche de résine transparente,
(1) la couche de matière de base transparente et la couche de résine transparente contenant toutes les deux une résine de polyoléfine ;
(2) la couche de matière de base transparente ayant une épaisseur de couche de 10 à 250 µm et une dureté Martens de 20 à 30 N/mm², dans laquelle la dureté Martens est mesurée selon la description ;
(3) la couche de résine transparente ayant une dureté Martens de 100 N/mm² ou moins, et la dureté Martens de la couche de résine transparente étant plus grande que celle de la couche de matière de base transparente ; et
(4) l'épaisseur totale de la couche de matière de base transparente et de la couche de résine transparente étant de 100 à 420 µm.

2. Feuille de base décorative selon la revendication 1, dans laquelle la couche de matière de base transparente comprend un stratifié de deux couches ou plus.

3. Feuille décorative selon la revendication 1 ou 2, dans laquelle la couche de résine transparente comprend un stratifié de deux couches ou plus.

4. Feuille décorative selon l'une quelconque des revendications 1 à 3, dans laquelle une couche d'ajustement de brillance est formée sur la couche de résine transparente, et la couche d'ajustement de brillance est formée adjacente à la couche transparente de protection de surface.

5. Plaque décorative obtenue en laminant la feuille décorative selon l'une quelconque des revendications 1 à 4 sur une surface à coller, la surface à coller étant un carton ou une matière de base composite ayant un carton sur sa surface.

6. Plaque décorative selon la revendication 5, dans laquelle le carton a une rugosité moyenne à dix points Rzⱼᵢₛ de 80 à 250 µm, la rugosité moyenne à dix points Rzⱼᵢₛ étant une valeur mesurée selon JIS B 0601-2001.

7. Plaque décorative selon la revendication 6, qui est une plaque décorative pour des planchers.
